# EUROPEAN PATENT APPLICATION

(11) **EP 4 564 718 A1**
(43) Date of publication of application: **04.06.2025**
(21) Application number: 22952544.9
(22) Date of filing: 29.07.2022
(51) Int. Cl.: H04L 5/00

(54) **CHANNEL STATE INFORMATION MEASUREMENT METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/109187
(87) International publication number: WO 2024/021097

(57) **Abstract**

Provided in the embodiments of the present disclosure is a channel state information (CSI) measurement method, which is executed by means of a terminal. The method comprises: according to state indication information, determining a measurement resource used for measuring CSI, wherein the state indication information is at least used for indicating a period during which a space unit of a base station is turned off and/or a period during which same is turned on.

## Description

### TECHNICAL FIELD

The present disclosure relates to the field of wireless communication technology but is not limited to the field of wireless communication technology, and in particular to a method and apparatus for measuring channel state information, a communication device and a storage medium.

### BACKGROUND

In order to reduce energy consumption of base stations, some antenna-related spatial units, such as antenna panels, can be dynamically turned on or off. Dynamically turning on or off the spatial units will cause changes in beams or pilots that are actually transmitted. In related art, a terminal needs to report channel state information (CSI). Before reporting the CSI, the terminal needs to perform CSI measurement, for example, measuring the pilot (also called a reference signal). Measurement resources are required to perform the CSI measurement. In this case, if the base station dynamically turns off the beam or pilot used for the CSI measurement, how to determine the measurement resources used to perform the CSI measurement is a problem that needs to be considered.

### SUMMARY

The embodiments of the present disclosure disclose a method and apparatus for measuring channel state information, a communication device and a storage medium.

According to a first aspect of the embodiments of the present disclosure, a method for measuring channel state information is provided, the method is performed by a terminal, and the method includes:
determining, according to state indication information, a measurement resource for measuring the channel state information (CSI);
where the state indication information is used to at least indicate: a time period during which a spatial unit of a base station is turned off and/or a time period during which the spatial unit is turned on.

In an embodiment, the measurement resource is associated with a CSI report.

In an embodiment, the spatial unit includes at least one of the following:
an antenna unit;
an antenna port;
a transceiving link;
a beam;
a pilot; and
an antenna panel.

In an embodiment, determining, according to the state indication information, the measurement resource for measuring the channel state information includes:
determining the measurement resource for measuring the channel state information according to a configuration result of a predetermined higher layer parameter and the state indication information;
where the predetermined higher layer parameter includes at least one of the following:
a first parameter which is a parameter used for channel measurement; or
a second parameter which is a parameter used for interference measurement.

In an embodiment, determining the measurement resource for measuring the channel state information according to the configuration result of the predetermined higher layer parameter and the state indication information includes at least one of the following:
in response to that the first parameter is not configured and the state indication information indicates the time period during which the spatial unit is turned off, determining the measurement resource to be: a non-zero power (NZP) channel state information reference signal (CSI-RS) resource a time domain position of which is before a channel state information (CSI) reference resource and is not within the turned off time period;
in response to that the second parameter is not configured and the state indication information indicates the time period during which the spatial unit is turned off, determining the measurement resource to be: a channel state information interference measurement (CSI-IM) resource a time domain position of which is before the CSI reference resource and is not within the turned off time period;
in response to that the second parameter is not configured and the state indication information indicates the time period during which the spatial unit is turned off, determining the measurement resource to be: an NZP CSI-RS resource used for interference measurement a time domain position of which is before the CSI reference resource and is not within the turned off time period;
in response to that the first parameter is configured and the state indication information indicates the time period during which the spatial unit is turned off, determining the measurement resource to be: an NZP CSI-RS resource report a time domain position of which is before the CSI reference resource, is not within the turned off time period, and is closest to an occasion for reporting a CSI report;
in response to that the second parameter is configured and the state indication information indicates the time period during which the spatial unit is turned off, determining the measurement resource to be: a CSI-IM resource a time domain position of which is before the CSI reference resource, is not within the turned off time period, and is closest to an occasion for reporting a CSI report; and
in response to that the second parameter is configured and the state indication information indicating the time period during which the spatial unit is turned off, determining the measurement resource to be: an NZP CSI-RS resource used for interference measurement a time domain position of which is before the CSI reference resource, is not within the turned off time period, and is closest to the occasion for reporting a CSI report.

In an embodiment, the method further includes:
performing an operation of sending a CSI report to a base station based on the state indication information.

In an embodiment, the operation of sending the CSI report to the base station based on the state indication information includes at least one of the following:
in response to that a time domain position of the measurement resource is before a CSI reference resource, the time domain position is not within a time domain position corresponding to the time period during which the spatial unit is turned off as indicated by the state indication information, and/or at least one transmission occasion for CSI-RS is received, sending the CSI report to the base station;
in response to that the terminal is configured with connected mode discontinuous reception (C-DRX), the time domain position of the measurement resource is before the CSI reference resource, the time domain position is not within a time domain position corresponding to the time period during which the spatial unit is turned off as indicated by the state indication information, and/or at least one transmission occasion for the CSI-RS is received within an active time period, sending the CSI report to the base station;
in response to that the terminal is configured with C-DRX, a CSR-RS resource set that is used for channel measurement and is associated with the CSI report is configured as a first number of resource sets and a second number of resource pairs, a time domain position of the measurement resource is before the CSI reference resource, the time domain position is not within a time domain position corresponding to the time period during which the spatial unit is turned off as indicated by the state indication information, and/or at least one transmission occasion for the CSI-RS can be received for each CSI-RS resource of each of the resource pairs within the same active time period, sending the CSI report to the base station; and
in response to that the terminal is configured with C-DRX, the terminal is configured to monitor downlink control information (DCI) format 2-6, the terminal is configured with ps-TransmitOtherPeriodicCSI, a report configuration type is set to be a periodic type, the reported content is not preset content, the time domain position of the measurement resource is before the CSI reference resource, the time domain position is not within a time domain position corresponding to the time period during which the spatial unit is turned off as indicated by the state indication information, and/or at least one transmission occasion for CSI-RS is received, sending the CSI report to the base station.

In an embodiment, the method further includes:
receiving the state indication information sent by the base station.

According to a second aspect of the embodiments of the present disclosure, a method for measuring channel state information is provided, the method is performed by a base station, and the method includes:
sending state indication information to a terminal;
where the state indication information is used for the terminal to determine a measurement resource for measuring the channel state information (CSI), and the state indication information is at least used to indicate: a time period during which a spatial unit of the base station is turned off and/or a time period during which the spatial unit is turned on.

In an embodiment, the measurement resource is associated with a CSI report.

In an embodiment, the spatial unit includes at least one of the following:
an antenna unit;
an antenna port;
a transceiving link;
a beam;
a pilot; and
an antenna panel.

According to a third aspect of the embodiments of the present disclosure, an apparatus for measuring channel state information is provided, and the apparatus includes:
a determination module, configured to determine a measurement resource for measuring the channel state information (CSI) according to state indication information;
where the state indication information is at least used to indicate: a time period during which a spatial unit of a base station is turned off and/or a time period during which the spatial unit is turned on.

In an embodiment, the determining module is further configured to associate the measurement resource with a CSI report.

In an embodiment, the determining module is further configured to:
determine the measurement resource for measuring the channel state information according to a configuration result of a predetermined higher layer parameter and the state indication information;
where the predetermined higher layer parameters include at least one of the following:
a first parameter which is a parameter used for channel measurement; or
a second parameter which is a parameter used for interference measurement.

In an embodiment, the determining module is further configured to perform at least one of the following:
in response to that the first parameter is not configured and the state indication information indicates the time period during which the spatial unit is turned off, determining the measurement resource to be: a non-zero power (NZP) channel state information reference signal (CSI-RS) resource a time domain position of which is before a channel state information (CSI) reference resource and is not within the turned off time period;
in response to that the second parameter is not configured and the state indication information indicates the time period during which the spatial unit is turned off, determining the measurement resource to be: a channel state information interference measurement (CSI-IM) resource a time domain position of which is before the CSI reference resource and is not within the turned off time period;
in response to that the second parameter is not configured and the state indication information indicates the time period during which the spatial unit is turned off, determining the measurement resource to be: an NZP CSI-RS resource used for interference measurement a time domain position of which is before the CSI reference resource and is not within the turned off time period;
in response to that the first parameter is configured and the state indication information indicates the time period during which the spatial unit is turned off, determining the measurement resource to be: an NZP CSI-RS resource report a time domain position of which is before the CSI reference resource, is not within the turned off time period, and is closest to an occasion for reporting a CSI report;
in response to that the second parameter is configured and the state indication information indicates the time period during which the spatial unit is turned off, determining the measurement resource to be: a CSI-IM resource a time domain position of which is before the CSI reference resource, is not within the turned off time period, and is closest to an occasion for reporting a CSI report; and
in response to that the second parameter is configured and the state indication information indicating the time period during which the spatial unit is turned off, determining the measurement resource to be: an NZP CSI-RS resource used for interference measurement a time domain position of which is before the CSI reference resource, is not within the turned off time period, and is closest to an occasion for reporting a CSI report.

In an embodiment, the apparatus further includes:
an execution module, configured to execute an operation of sending a CSI report to the base station based on the state indication information.

In an embodiment, the apparatus further includes a sending module, configured to perform at least one of the following:
in response to that the time domain position of the measurement resource is before the CSI reference resource, the time domain position is not within a time domain position corresponding to the time period during which the spatial unit is turned off as indicated by the state indication information, and/or at least one transmission occasion for the CSI-RS is received, sending the CSI report to the base station;
in response to that the terminal is configured with connected mode discontinuous reception (C-DRX), the time domain position of the measurement resource is before the CSI reference resource, the time domain position is not within a time domain position corresponding to the time period during which the spatial unit is turned off as indicated by the state indication information, and/or at least one transmission occasion for the CSI-RS is received within an active time period, sending the CSI report to the base station;
in response to that the terminal is configured with C-DRX, a CSR-RS resource set for channel measurement that is associated with the CSI report is configured as a first number of resource sets and a second number of resource pairs, a time domain position of the measurement resource is before the CSI reference resource, the time domain position is not within a time domain position corresponding to the time period during which the spatial unit is turned off as indicated by the state indication information, and/or at least one transmission occasion for the CSI-RS can be received for each CSI-RS resource of the resource pairs within the same active time period, sending the CSI report to the base station; and
in response to that the terminal is configured with C-DRX, the terminal is configured to monitor downlink control information (DCI) format 2-6, the terminal is configured with ps-TransmitOtherPeriodicCSI, a report configuration type is set to be a periodic type, the reported content is not preset content, the time domain position of the measurement resource is before the CSI reference resource, the time domain position is not within a time domain position corresponding to the time period during which the spatial unit is turned off as indicated by the state indication information, and/or at least one transmission occasion for CSI-RS is received, sending the CSI report to the base station.

In an embodiment, the apparatus further includes:
a receiving module, configured to receive the state indication information sent by the base station.

According to a fourth aspect of the embodiments of the present disclosure, an apparatus for measuring channel state information is provided, and the apparatus includes:
a sending module, configured to send state indication information to a terminal;
where the state indication information is used for the terminal to determine a measurement resource for measuring the channel state information (CSI), and the state indication information is at least used to indicate: a time period during which the base station is turned off and/or a time period during which the base station is turned on.

According to a fifth aspect of the embodiments of the present disclosure, a communication device is provided, the communication device including:
a processor; and
a memory for storing instructions executable by the processor;
where the processor is configured to implement the method described in any embodiment of the present disclosure when running the executable instructions.

According to a sixth aspect of the embodiments of the present disclosure, a computer storage medium is provided, the computer storage medium stores a computer executable program, and the executable program, when being executed by a processor, implements the method described in any embodiment of the present disclosure.

In the embodiments of the present disclosure, the measurement resource for measuring the channel state information (CSI) is determined based on state indication information; the state indication information is at least used to indicate: a time period during which a spatial unit of a base station is turned off and/or a time period during which the spatial unit is turned on. Here, since the measurement resource for measuring the channel state information (CSI) is determined based on the state indication information, the measurement resource can be adapted to the time period during which the spatial unit of the base station is turned off and/or the time period during which the spatial unit is turned on as indicated by the state indication information, and compared to the approach of determining the measurement resource not based on the state indication information, it can reduce the situation where the CSI measurement is still performed after the spatial unit is turned off, has a strong adaptability, and makes the CSI measurement result more accurate and reliable.

### BRIEF DESCRIPTION OF THE DRAWINGS

FIG. 1 is a schematic structural diagram of a wireless communication system according to an illustrative embodiment.
FIG. 2 is a schematic flow chart of a method for measuring channel state information according to an illustrative embodiment.
FIG. 3 is a schematic flow chart of a method for measuring channel state information according to an illustrative embodiment.
FIG. 4 is a schematic flow chart of a method for measuring channel state information according to an illustrative embodiment.
FIG. 5 is a schematic flow chart of a method for measuring channel state information according to an illustrative embodiment.
FIG. 6 is a schematic flow chart of a method for measuring channel state information according to an illustrative embodiment.
FIG. 7 is a schematic flow chart of a method for measuring channel state information according to an illustrative embodiment.
FIG. 8 is a schematic flow chart of a method for measuring channel state information according to an illustrative embodiment.
FIG. 9 is a schematic flow chart of a method for measuring channel state information according to an illustrative embodiment.
FIG. 10 is a schematic flow chart of a method for measuring channel state information according to an illustrative embodiment.
FIG. 11 is a schematic flow chart of a method for measuring channel state information according to an illustrative embodiment.
FIG. 12 is a schematic flow chart of a method for measuring channel state information according to an illustrative embodiment.
FIG. 13 is a schematic flow chart of a method for measuring channel state information according to an illustrative embodiment.
FIG. 14 is a schematic flow chart of a method for measuring channel state information according to an illustrative embodiment.
FIG. 15 is a schematic flow chart of a method for measuring channel state information according to an illustrative embodiment.
FIG. 16 is a schematic structural diagram of an apparatus for measuring channel state information according to an illustrative embodiment.
FIG. 17 is a schematic structural diagram of an apparatus for measuring channel state information according to an illustrative embodiment.
FIG. 18 is a schematic structural diagram of a terminal according to an illustrative embodiment.
FIG. 19 is a block diagram of a base station according to an illustrative embodiment.

### DETAILED DESCRIPTION

Illustrative embodiments will be described in detail herein, examples of which are shown in the accompanying drawings. When the following description refers to the drawings, unless otherwise indicated, the same numbers in different drawings represent the same or similar elements. The implementations described in the following illustrative embodiments do not represent all implementations consistent with the embodiments of the present disclosure. Rather, they are merely examples of devices and methods consistent with some aspects of the embodiments of the present disclosure as detailed in the appended claims.

The terms used in the embodiments of the present disclosure are only for the purpose of describing specific embodiments and are not intended to limit the embodiments of the present disclosure. The singular forms of "a", "an" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to determining".

For the purpose of brevity and ease of understanding, the terms "greater than" or "less than" are used herein to characterize size relationships. However, those skilled in the art can understand that the term "greater than" also covers the meaning of "greater than or equal to", and "less than" also covers the meaning of "less than or equal to".

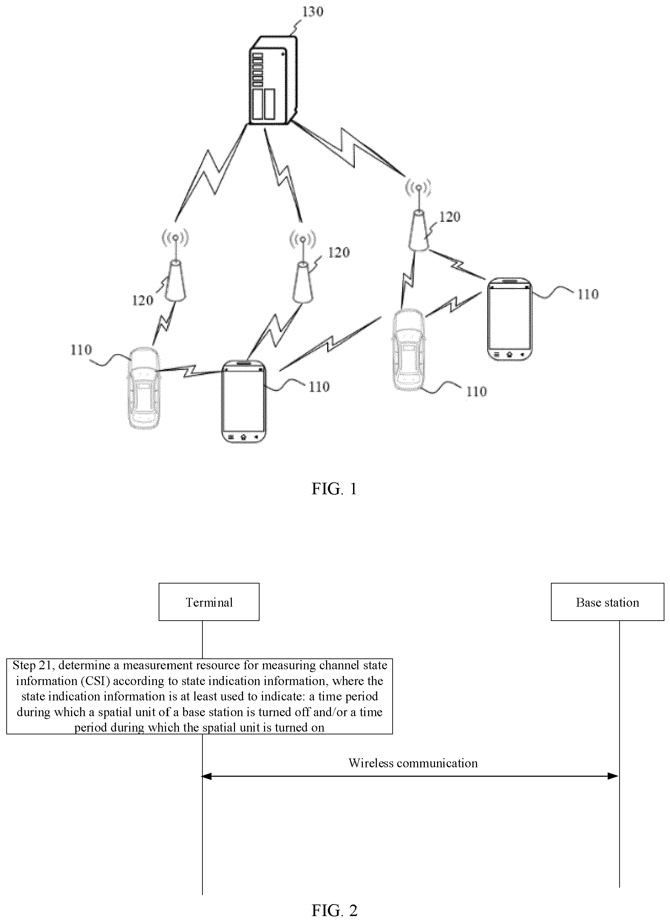

Please refer to FIG. 1, which is a schematic diagram showing a structure of a wireless communication system is provided by an embodiment of the present disclosure. As shown in FIG. 1, the wireless communication system is a communication system based on mobile communication technology, and the wireless communication system may include: a plurality of user equipments 110 and a plurality of base stations 120.

The user equipment 110 can refer to a device that provides voice and/or data connectivity to the user. The user equipment 110 can communicate with one or more core networks via a Radio Access Network (RAN). The user equipment 110 can be an Internet of Things user equipment, such as a sensor device, a mobile phone, and a computer with an Internet of Things user equipment. For example, it can be a fixed, portable, pocket-sized, handheld, computer-built-in or vehicle-mounted device. For example, it can be a station (STA), a subscriber unit, a subscriber station, a mobile station, a mobile, a remote station, an access point, a remote terminal, an access terminal, a user terminal, a user agent, a user device, or a user equipment. Alternatively, the user equipment 110 can also be a device of an unmanned aerial vehicle. Alternatively, the user equipment 110 can also be a vehicle-mounted device, for example, it can be a driving computer with wireless communication function, or a wireless user device connected to an external driving computer. Alternatively, the user equipment 110 may also be a roadside device, for example, a street lamp, a signal lamp, or other roadside device that has a wireless communication function.

The base station 120 may be a network-side device in a wireless communication system. The wireless communication system may be a fourth generation mobile communication technology (4G) system, also known as a long term evolution (LTE) system; or, the wireless communication system may be a 5G system, also known as a new air interface system or a 5G NR system. Alternatively, the wireless communication system may be a next generation system of the 5G system. The access network in the 5G system may be referred to as a New Generation-Radio Access Network (NG-RAN).

The base station 120 can be an evolved base station (eNB) adopted in a 4G system. Alternatively, the base station 120 can also be a base station (gNB) adopting a central distributed architecture in a 5G system. When the base station 120 adopts a central distributed architecture, it usually includes a central unit (CU) and at least two distributed units (DU). The central unit is provided with a protocol stack of a packet data convergence protocol (PDCP) layer, a radio link control (RLC) layer, and a media access control (MAC) layer; the distributed unit is provided with a physical (PHY) layer protocol stack. The specific implementations of the base station 120 are not limited in the embodiments of the present disclosure.

A wireless connection may be established between the base station 120 and the user equipment 110 via a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface may be a wireless air interface based on the mobile communication network technology standard of the next generation of 5G.

In some embodiments, an End to End (E2E) connection may also be established between the user equipments 110, such as vehicle to vehicle (V2V) communication, vehicle to Infrastructure (V2I) communication, and vehicle to pedestrian (V2P) communication in vehicle to everything (V2X) communication.

Here, the above user equipment can be considered as the terminal device in the following embodiments.

In some embodiments, the wireless communication system may further include a network management device 130.

Several base stations 120 are respectively connected to the network management device 130. The network management device 130 may be a core network device in a wireless communication system. For example, the network management device 130 may be a mobility management entity (MME) in an Evolved Packet Core (EPC). Alternatively, the network management device may be other core network devices, such as a serving gateway (SGW), a public data network gateway (PGW), a Policy and Charging Rules Function (PCRF), or a Home Subscriber Server (HSS). The implementations of the network management device 130 are not limited in the embodiments of the present disclosure.

In order to facilitate understanding by those skilled in the art, a plurality of implementations are listed in the embodiments of the present disclosure to clearly illustrate the technical solutions of the embodiments of the present disclosure. Of course, those skilled in the art can understand that the plurality of embodiments provided in the embodiments of the present disclosure can be executed separately, or can be executed in combination with the methods of other embodiments in the embodiments of the present disclosure, or can be executed together with some methods in other related technologies separately or in combination; which are not limited in the embodiments of the present disclosure.

In order to better understand the technical solutions described in any embodiment of the present disclosure, the application scenarios in the related art are described first.

In a scenario embodiment, in order to reduce the energy consumption of the base station, some spatial units may be dynamically turned on or off. The spatial unit may be an antenna unit, an antenna port, a transceiving link, a beam, an antenna panel, etc. Dynamically turning on or off the spatial unit may cause changes in the beam or pilot that is actually transmitted, for example, some beams are turned off or some pilots are turned off.

In an embodiment, the base station may configure candidate spatial units that can be turned off for the terminal, and dynamically indicate a beam or pilot to be turned off, for example, dynamically indicating to the terminal the beam or pilot (or generally referred to as a spatial unit) to be turned off through downlink control information (DCI) or a media access control layer (MAC) control element (CE). In an embodiment, a time period for turning off the spatial unit may also be indicated or configured.

In an embodiment, the terminal needs to report channel state information (CSI). Before reporting the CSI, the terminal needs to perform CSI measurement. Measurement resources are required to perform the CSI measurement.

In an embodiment, the CSI reference resource is a certain slot before a CSI reporting occasion. The method for determining the CSI reference resource has been defined in the relevant protocol.

In an embodiment, a non-zero power CSI reference signal (NZP CSI-RS) and channel state information-interference measurement (CSI-IM) both belong to CSI-RS.

The measurement resources used for performing CSI measurement are illustrated in Table 1 below, which shows the correspondence between higher layer parameter setting and measurement resources:

**Table 1**

| Higher layer parameter setting | Measurement resource for channel measurement | Measurement resource for interference measurement |
|---|---|---|
| *timeRestrictionFor-ChannelMeasurements* is set to *"notConfigured"* | A NZP CSI-RS resource with a time domain position no later than the CSI reference resource in associated CSI resource configuration. | / |
| *timeRestrictionFor-ChannelMeasurements* is set to *"Configured"* | A NZP CSI-RS resource with a time domain position no later than the CSI reference resource and closest to a reporting occasion in associated CSI resource configuration. | / |
| *timeRestrictionForInterf erenceMeasurements* is set to *"notConfigured"* | / | A CSI-IM resource with a time domain position no later than the CSI reference resource or a NZP CSI-RS resource used for interference measurement in associated CSI resource configuration. |
| *timeRestrictionForInterf erenceMeasurements* is set to *"Configured"* | / | A CSI-IM resource with a time domain position no later than the CSI reference resource and closest to the reporting occasion or a NZP CSI-RS resource used for interference measurement in associated CSI resource configuration. |

As shown in FIG. 2, this embodiment provides a method for measuring channel state information, the method is performed by a terminal, and the method includes the following step(s).

In step 21, a measurement resource for measuring the channel state information (CSI) is determined according to state indication information;
where the state indication information is at least used to indicate: a time period during which a spatial unit of a base station is turned off and/or a time period during which the spatial unit is turned on.

Here, the terminal involved in the embodiments of the present disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a new radio (NR) terminal of a predetermined version (for example, an R17 NR terminal).

The base stations involved in the present disclosure may be various types of base stations, for example, a base station of a third generation mobile communication (3G) network, a base station of a fourth generation mobile communication (4G) network, a base station of a fifth generation mobile communication (5G) network, or other evolved base stations.

In an embodiment, the measurement resource may be a time domain and/or frequency domain resource used for measuring the CSI. For example, the measurement resource may be a slot, a symbol, and so on.

In an embodiment, the spatial unit may be a functional unit associated with an antenna for wireless transmission. For example, the spatial unit may be at least one of the following:
an antenna unit;
an antenna port;
a transceiving link;
a beam;
a pilot; and
an antenna panel.

Herein, the spatial unit being turned off means that the function corresponding to the spatial unit is turned off, for example, the function of sending a beam or a pilot is turned off. It should be noted that the turning off of the beam or pilot may affect the CSI measurement result. For example, an accurate CSI measurement requires five measurement sampling points, but if some of the measurement sampling points are in the pilot turned off period, the measurement result will deviate from the actual situation, affecting the CSI measurement result.

It should be noted that, in the present disclosure, the measurement resource used for measuring the channel state information (CSI) may also be understood as the measurement resource used for performing CSI measurement. The CSI measurement performed may also be channel measurement and/or interference measurement.

In an embodiment, the measurement resource used for channel measurement and/or interference measurement for CSI measurement is determined based on the state indication information; the state indication information is at least used to indicate: the time period during which the spatial unit of the base station is turned off and/or the time period during which the spatial unit is turned on.

In an embodiment, the state indication information sent by the base station is received, the state indication information is at least used to indicate: the time period during which the spatial unit of the base station is turned off and/or the time period during which the spatial unit is turned on. The measurement resource for measuring the channel state information (CSI) is determined according to the state indication information. For example, the time period during which the spatial unit is turned off and/or the time period during which the spatial unit is turned on may be dynamically indicated through DCI. For example, it may be considered that upon receipt of the DCI (indicating that a certain pilot is turned off), it takes effect immediately, and a time duration corresponding to the turned-off time period is a fixed time duration configured by the higher layer, for example, 20 ms.

In an embodiment, the state indication information sent by the base station is periodically received, the state indication information is at least used to indicate: the time period during which the spatial unit of the base station is turned off and/or the time period during which the spatial unit is turned on. The measurement resource for measuring the channel state information (CSI) is determined according to the state indication information. In this way, the measurement resource can be updated in real time according to the state indication information.

In an embodiment, in response to determining the measurement resources, a request message for requesting the state indication information is sent to the base station, the state indication information is at least used to indicate: the time period during which the spatial unit of the base station is turned off and/or the time period during which the spatial unit is turned on. The state indication information sent by the base station is received. The measurement resource for measuring the channel state information (CSI) is determined according to the state indication information.

In an embodiment, the measurement resource for measuring the channel state information (CSI) is determined according to the state indication information, the state indication information is at least used to indicate: the time period during which the spatial unit of the base station is turned off and/or the time period during which the spatial unit is turned on; the measurement resource is associated with a CSI report. For example, different measurement resources correspond to different CSI reports. It can be understood that the measurement result of the CSI measurement performed based on the measurement resource can be included in the CSI report. One or a set of measurement resources corresponds to one CSI report.

In an embodiment, the measurement resource for measuring the channel state information (CSI) is determined according to the state indication information; the state indication information is at least used to indicate: the time period during which the spatial unit of the base station is turned off and/or the time period during which the spatial unit is turned on; and the measurement resource is associated with a CSI report. The CSI measurement is performed based on the measurement resource to obtain a measurement result of the CSI measurement. The CSI report is sent to the base station, where the CSI report includes the measurement result.

In an embodiment, a configuration result of a predetermined higher layer parameter and the state indication information are obtained; the state indication information is at least used to indicate: the time period during which the spatial unit of the base station is turned off and/or the time period during which the spatial unit is turned on. The measurement resource for measuring the channel state information is determined according to the configuration result of the predetermined higher layer parameter and the state indication information; the predetermined higher layer parameter includes at least one of the following: a first parameter, which is a parameter for channel measurement; or a second parameter, which is a parameter for interference measurement.

In an example, referring to Table 1 again, the predetermined higher layer parameter may be the parameter *timeRestrictionFor-ChannelMeasurements* and the parameter *timeRestrictionForInterferenceMeasurements* configured by the higher layer of the protocol layer. For example, the first parameter may be *"timeRestrictionFor-ChannelMeasurements"* and the second parameter may be *"timeRestrictionForInterferenceMeasurements".* The configuration results of the first parameter and the second parameter may be *"Configured"* or *"notConfigured".*

In an embodiment, a configuration result of a predetermined higher layer parameter and state indication information are obtained; the state indication information is at least used to indicate: a time period during which a spatial unit of the base station is turned off and/or a time period during which the spatial unit is turned on. In response to that the first parameter is not configured and the state indication information indicates the time period during which the spatial unit is turned off, the measurement resource is determined to be: a non-zero power channel state information reference signal (NZP CSI-RS) resource a time domain position of which is before a channel state information (CSI) reference resource and is not within the turned off time period. The measurement resource is associated with a CSI report.

In an embodiment, a configuration result of a predetermined higher layer parameter and state indication information are obtained; the state indication information is at least used to indicate: a time period during which a spatial unit of the base station is turned off and/or a time period during which the spatial unit is turned on. In response to that the second parameter is not configured and the state indication information indicates the time period during which the spatial unit is turned off, the measurement resource is determined to be: a channel state information interference measurement (CSI-IM) resource a time domain position of which is before the CSI reference resource and is not within the turned-off time period. The measurement resource is associated with a CSI report.

In an embodiment, a configuration result of a predetermined higher layer parameter and state indication information are obtained; the state indication information is at least used to indicate: a time period during which a spatial unit of the base station is turned off and/or a time period during which the spatial unit is turned on. In response to that the second parameter is not configured and the state indication information indicates the time period during which the spatial unit is turned off, the measurement resource is determined to be: an NZP CSI-RS resource used for interference measurement a time domain position of which is before the CSI reference resource and is not within the turned-off time period. The measurement resource is associated with a CSI report.

In an embodiment, a configuration result of a predetermined higher layer parameter and state indication information are obtained; the state indication information is at least used to indicate: a time period during which a spatial unit of the base station is turned off and/or a time period during which the spatial unit is turned on. In response to that the first parameter is configured and the state indication information indicates the time period during which the spatial unit is turned off, the measurement resource is determined to be: an NZP CSI-RS resource a time domain position of which is before the CSI reference resource, is not within the turned-off time period, and is closest to an occasion of reporting a CSI report. The measurement resource is associated with the CSI report.

In an embodiment, a configuration result of a predetermined higher layer parameter and state indication information are obtained; the state indication information is at least used to indicate: a time period during which a spatial unit of the base station is turned off and/or a time period during which the spatial unit is turned on. In response to that the second parameter is configured and the state indication information indicates the time period during which the spatial unit is turned off, the measurement resource is determined to be: a CSI-IM resource a time domain position of which is before the CSI reference resource, is not within the turned-off time period, and is closest to an occasion of reporting a CSI report. The measurement resource is associated with the CSI report.

In an embodiment, a configuration result of a predetermined higher layer parameter and state indication information are obtained; the state indication information is at least used to indicate: a time period during which a spatial unit of the base station is turned off and/or a time period during which the spatial unit is turned on. In response to that the second parameter is configured and the state indication information indicates the time period during which the spatial unit is turned off, the measurement resource is determined to be: an NZP CSI-RS resource used for interference measurement a time domain position of which is before the CSI reference resource, is not within the turned-off time period, and is closest to an occasion of reporting a CSI report.

In an embodiment, state indication information is received, where the state indication information is at least used to indicate: a time period during which a spatial unit of a base station is turned off and/or a time period during which the spatial unit is turned on. A measurement resource for measuring channel state information CSI is determined according to the state indication information. CSI measurement is performed based on the measurement resource to obtain a measurement result. An operation of sending a CSI report to a base station is performed based on the state indication information, where the CSI report includes the measurement result.

In an embodiment, state indication information is received, where the state indication information is at least used to indicate: a time period during which a spatial unit of a base station is turned off and/or a time period during which the spatial unit is turned on. A measurement resource for measuring channel state information CSI is determined according to the state indication information. CSI measurement is performed based on the measurement resource to obtain a measurement result. In response to that a time domain position of the measurement resource is before the CSI reference resource, the time domain position is not within a time domain position corresponding to the time period during which the spatial unit is turned off indicated by the state indication information, and/or at least one transmission occasion of the CSI-RS is received, a CSI report is sent to the base station, where the CSI report includes the measurement result. It should be noted that each transmission occasion corresponds to reception of a CSI-RS for channel measurement or interference measurement.

In an embodiment, state indication information is received, where the state indication information is at least used to indicate: a time period during which a spatial unit of a base station is turned off and/or a time period during which the spatial unit is turned on. A measurement resource for measuring channel state information CSI is determined according to the state indication information. CSI measurement is performed based on the measurement resource to obtain a measurement result. In response to that the terminal is configured with connected mode discontinuous reception (C-DRX), a time domain position of the measurement resource is before the CSI reference resource, the time domain position is not within a time domain position corresponding to the time period during which the spatial unit is turned off as indicated by the state indication information, and/or at least one transmission occasion for the CSI-RS is received within an active time period, a CSI report is sent to the base station, where the CSI report includes the measurement result.

In an embodiment, state indication information is received, where the state indication information is at least used to indicate: a time period during which a spatial unit of a base station is turned off and/or a time period during which the spatial unit is turned on. A measurement resource for measuring channel state information CSI is determined according to the state indication information. CSI measurement is performed based on the measurement resource to obtain a measurement result. In response to that the terminal is configured with C-DRX, a CSR-RS resource set that is used for channel measurement and associated with a CSI report is configured as a first number of resource sets and a second number of resource pairs, a time domain position of the measurement resource is before the CSI reference resource, the time domain position is not within a time domain position corresponding to the time period during which the spatial unit is turned off as indicated by the state indication information, and/or at least one transmission occasion for the CSI-RS can be received for each CSI-RS resource of each of the resource pairs within the same active time period, the CSI report is sent to the base station, where the CSI report includes the measurement result.

In an embodiment, state indication information is received, where the state indication information is at least used to indicate: a time period during which a spatial unit of a base station is turned off and/or a time period during which the spatial unit is turned on. A measurement resource for measuring channel state information CSI is determined according to the state indication information. CSI measurement is performed based on the measurement resource to obtain a measurement result. In response to that the terminal is configured with C-DRX, the terminal is configured to monitor a downlink control information (DCI) format 2-6, the terminal is configured with ps-TransmitOtherPeriodicCSI, a report configuration type (*reportConfigType)* is set to a periodic type ('periodic'), report content is not preset content (herein, the preset content can be 'cri-RSRP', 'ssb-Index-RSRP', 'cri-RSRP-Capability[Set]Index' and 'ssb-Index-RSRP-Capability[Set]Index', etc.), a time domain position of the measurement resource is before the CSI reference resource, the time domain position is not within a time domain position corresponding to the time period during which the spatial unit is turned off as indicated by the state indication information and/or at least one transmission occasion for the CSI-RS is received, a CSI report is sent to the base station, where the CSI report includes the measurement result.

In the embodiments of the present disclosure, the measurement resource for measuring the channel state information (CSI) is determined based on the state indication information, where the state indication information is at least used to indicate: a time period during which a spatial unit of a base station is turned off and/or a time period during which the spatial unit is turned on. Herein, since the measurement resource for measuring the channel state information (CSI) is determined based on the state indication information, the measurement resource can be adapted to the time period during which the spatial unit of the base station is turned off and/or the time period during which the spatial unit is turned on as indicated by the state indication information, and compared to the approach of determining the measurement resource not based on the state indication information, it can reduce the situation in which the CSI measurement is still performed after the spatial unit is turned off, have strong adaptability, and make the CSI measurement result more accurate and reliable.

It should be noted that those skilled in the art can understand that the method provided in the embodiments of the present disclosure can be executed alone or together with some methods in the embodiments of the present disclosure or some methods in related art.

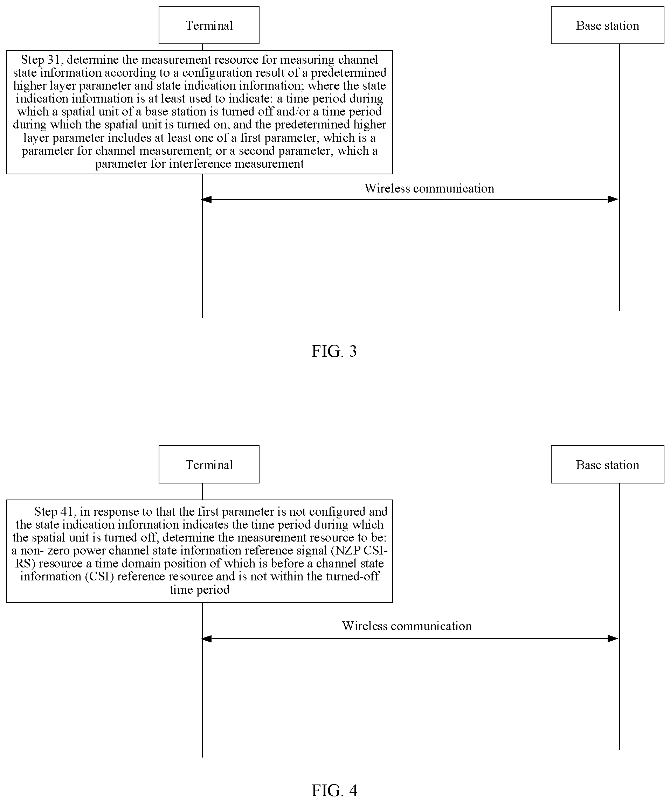

As shown in FIG. 3, this embodiment provides a method for measuring channel state information, the method is performed by a terminal, and the method includes the following step(s).

In step 31, the measurement resource for measuring channel state information is determined according to a configuration result of a predetermined higher layer parameter and state indication information; where the state indication information is at least used to indicate: a time period during which a spatial unit of a base station is turned off and/or a time period during which the spatial unit is turned on. The predetermined higher layer parameter includes at least one of the following: a first parameter, which is a parameter for channel measurement; or a second parameter, which a parameter for interference measurement.

In an embodiment, the spatial unit includes at least one of the following:
an antenna unit;
an antenna port;
a transceiving link;
a beam;
a pilot; and
an antenna panel.

For example, please refer to Table 2, which shows the correspondence between higher layer parameter settings and measurement resources:

**Table 2**

| Higher layer parameter settings | Measurement resource for channel measurement | Measurement resource for interference measurement |
|---|---|---|
| *timeRestrictionFor-ChannelMeasurements* is set to *" notConfigured "* | A NZP CSI-RS resource with a time domain position no later than the CSI reference resource and not within the time period during which the spatial unit is turned off in associated CSI resource configuration. | / |
| *timeRestrictionFor-ChannelMeasurements* is set to " *Configured "* | A NZP CSI-RS resource with a time domain position no later than the CSI reference resource, not within the time period during which the spatial unit is turned off, and closest to a reporting occasion of a CSI report in associated CSI resource configuration. | / |
| *timeRestrictionForInterf erenceMeasurements* is set to *" notConfigured "* | / | A CSI-IM resource with a time domain position no later than the CSI reference resource and not within a time period during which the spatial unit is turned off, or an NZP CSI-RS resource used for interference measurement, in associated CSI resource configuration. |
| *timeRestrictionForInterf erenceMeasurements* is set to " *Configured "* | / | A CSI-IM resource with a time domain position no later than the CSI reference resource, not within the time period during which the spatial unit is turned off, and closest to a reporting occasion of a CSI report, or an NZP CSI-RS resource used for interference measurement, in associated CSI resource configuration. |

In an embodiment, a configuration result of a predetermined higher layer parameter and the state indication information are obtained; where the state indication information is at least used to indicate: a time period during which a spatial unit of a base station is turned off and/or a time period during which the spatial unit is turned on. In response to that the first parameter is not configured and the state indication information indicates the time period during which the spatial unit is turned off, the measurement resource is determined to be: a non-zero power channel state information reference signal (NZP CSI-RS) resource a time domain position of which is before a channel state information (CSI) reference resource and is not within the turned off time period. The measurement resource is associated with a CSI report.

In an embodiment, a configuration result of a predetermined higher layer parameter and the state indication information are obtained; where the state indication information is at least used to indicate: a time period during which a spatial unit of a base station is turned off and/or a time period during which the spatial unit is turned on. In response to that the second parameter is not configured and the state indication information indicates the time period during which the spatial unit is turned off, the measurement resource is determined to be: a channel state information interference measurement (CSI-IM) resource a time domain position of which is before the CSI reference resource and is not within the turned-off time period. The measurement resource is associated with a CSI report.

In an embodiment, a configuration result of a predetermined higher layer parameter and the state indication information are obtained; where the state indication information is at least used to indicate: a time period during which a spatial unit of a base station is turned off and/or a time period during which the spatial unit is turned on. In response to that the second parameter is not configured and the state indication information indicates the time period during which the spatial unit is turned off, the measurement resource is determined to be: an NZP CSI-RS resource used for interference measurement a time domain position of which is before the CSI reference resource and is not within the turned-off time period. The measurement resource is associated with a CSI report.

In an embodiment, a configuration result of a predetermined higher layer parameter and the state indication information are obtained; where the state indication information is at least used to indicate: a time period during which a spatial unit of a base station is turned off and/or a time period during which the spatial unit is turned on. In response to that the first parameter is configured and the state indication information indicates the time period during which the spatial unit is turned off, the measurement resource is determined to be: an NZP CSI-RS resource a time domain position of which is before the CSI reference resource, is not within the turned-off time period, and is closest to an occasion of reporting a CSI report. The measurement resource is associated with the CSI report.

In an embodiment, a configuration result of a predetermined higher layer parameter and the state indication information are obtained; where the state indication information is at least used to indicate: a time period during which a spatial unit of a base station is turned off and/or a time period during which the spatial unit is turned on. In response to that the second parameter is configured and the state indication information indicates the time period during which the spatial unit is turned off, the measurement resource is determined to be: a CSI-IM resource a time domain position of which is before the CSI reference resource, is not within the turned-off time period, and is closest to an occasion of reporting a CSI report. The measurement resource is associated with the CSI report.

In an embodiment, a configuration result of a predetermined higher layer parameter and the state indication information are obtained; where the state indication information is at least used to indicate: a time period during which a spatial unit of a base station is turned off and/or a time period during which the spatial unit is turned on. In response to that the second parameter is configured and the state indication information indicates the time period during which the spatial unit is turned off, the measurement resource is determined to be: an NZP CSI-RS resource used for interference measurement a time domain position of which is before the CSI reference resource, is not within the turned-off time period, and is closest to an occasion of reporting a CSI report.

It should be noted that those skilled in the art can understand that the method provided in the embodiment of the present disclosure can be executed alone or together with some methods in the embodiments of the present disclosure or some methods in related art.

As shown in FIG. 4, this embodiment provides a method for measuring channel state information, the method is performed by a terminal, and the method includes the following step(s).

In step 41, in response to that the first parameter is not configured and the state indication information indicates the time period during which the spatial unit is turned off, the measurement resource is determined to be: a non- zero power channel state information reference signal (NZP CSI-RS) resource a time domain position of which is before the channel state information CSI reference resource and is not within the turned-off time period.

For the description of step 41, reference can be made to the description of step 21 or step 31, which will not be repeated here.

It should be noted that those skilled in the art can understand that the method provided in the embodiment of the present disclosure can be executed alone or together with some methods in the embodiments of the present disclosure or some methods in related art.

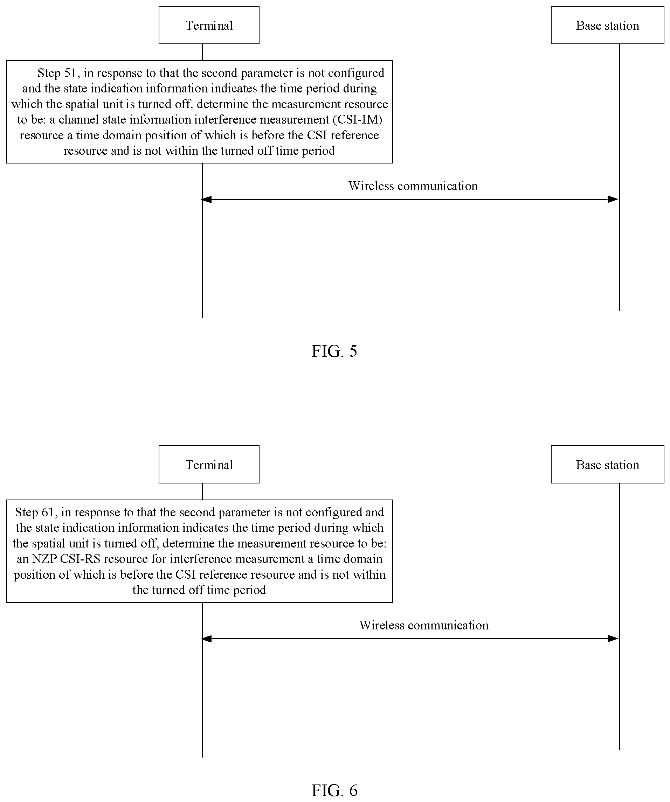

As shown in FIG. 5, this embodiment provides a method for measuring channel state information, the method is performed by a terminal, and the method includes the following step(s).

In step 51, in response to that the second parameter is not configured and the state indication information indicates the time period during which the spatial unit is turned off, the measurement resource is determined to be: a channel state information interference measurement (CSI-IM) resource a time domain position of which is before the CSI reference resource and is not within the turned off time period.

For the description of step 51, reference can be made to the description of step 21 or step 31, which will not be repeated here.

It should be noted that those skilled in the art can understand that the method provided in the embodiment of the present disclosure can be executed alone or together with some methods in the embodiments of the present disclosure or some methods in related art.

As shown in FIG. 6, this embodiment provides a method for measuring channel state information, the method is performed by a terminal, and the method includes the following step(s).

In step 61, in response to that the second parameter is not configured and the state indication information indicates the time period during which the spatial unit is turned off, the measurement resource is determined to be: an NZP CSI-RS resource for interference measurement a time domain position of which is before the CSI reference resource and is not within the turned off time period.

For the description of step 61, reference can be made to the description of step 21 or step 31, which will not be repeated here.

It should be noted that those skilled in the art can understand that the method provided in the embodiment of the present disclosure can be executed alone or together with some methods in the embodiments of the present disclosure or some methods in related art.

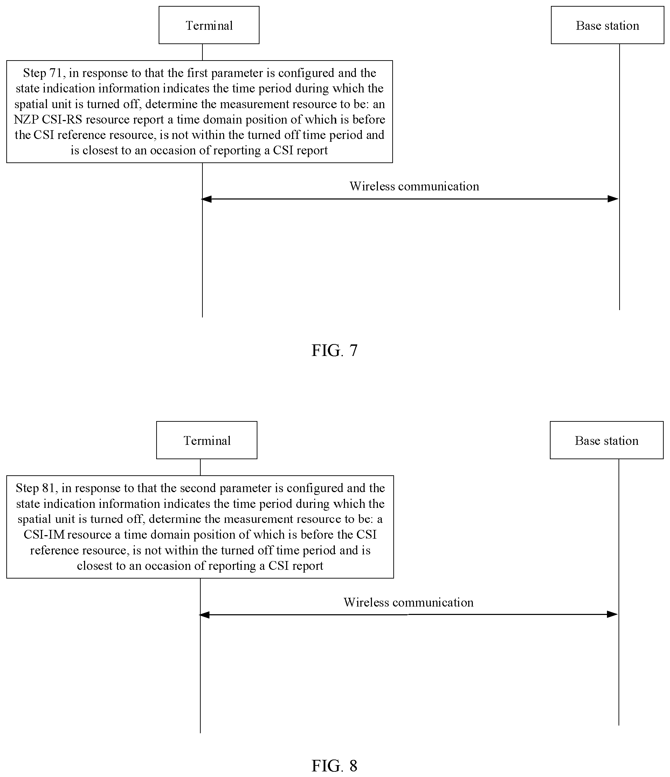

As shown in FIG. 7, this embodiment provides a method for measuring channel state information, the method is performed by a terminal, and the method includes the following step(s).

In step 71, in response to that the first parameter is configured and the state indication information indicates the time period during which the spatial unit is turned off, the measurement resource is determined to be: an NZP CSI-RS resource report a time domain position of which is before the CSI reference resource, is not within the turned off time period, and is closest to an occasion of reporting a CSI report.

For the description of step 71, reference can be made to the description of step 21 or step 31, which will not be repeated here.

It should be noted that those skilled in the art can understand that the method provided in the embodiment of the present disclosure can be executed alone or together with some methods in the embodiments of the present disclosure or some methods in related art.

As shown in FIG. 8, this embodiment provides a method for measuring channel state information, the method is performed by a terminal, and the method includes the following step(s).

In step 81, in response to that the second parameter is configured and the state indication information indicates the time period during which the spatial unit is turned off, the measurement resource is determined to be: a CSI-IM resource a time domain position of which is before the CSI reference resource, is not within the turned off time period, and is closest to an occasion of reporting a CSI report.

For the description of step 81, reference can be made to the description of step 21 or step 31, which will not be repeated here.

It should be noted that those skilled in the art can understand that the method provided in the embodiment of the present disclosure can be executed alone or together with some methods in the embodiments of the present disclosure or some methods in related art.

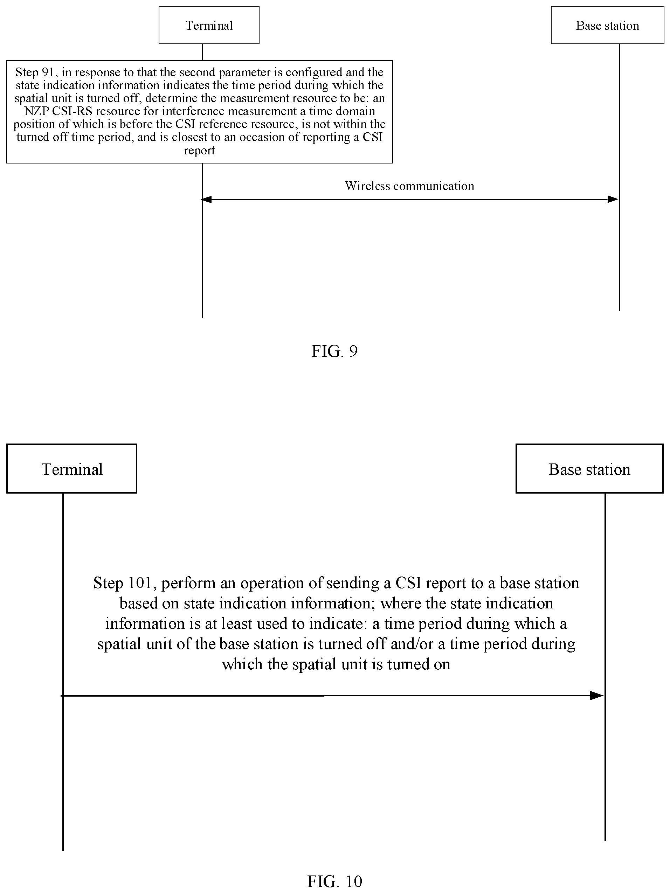

As shown in FIG. 9, this embodiment provides a method for measuring channel state information, the method is performed by a terminal, and the method includes the following step(s).

In step 91, in response to that the second parameter is configured and the state indication information indicates the time period during which the spatial unit is turned off, the measurement resource is determined to be: an NZP CSI-RS resource used for interference measurement a time domain position of which is before the CSI reference resource, is not within the turned off time period, and is closest to an occasion of reporting a CSI report.

For the description of step 91, reference can be made to the description of 21 or step 31, which will not be repeated here.

It should be noted that those skilled in the art can understand that the method provided in the embodiment of the present disclosure can be executed alone or together with some methods in the embodiments of the present disclosure or some methods in related art.

As shown in FIG. 10, this embodiment provides a method for measuring channel state information, the method is performed by a terminal, and the method includes the following step(s).

In step 101, an operation of sending a CSI report to a base station is performed based on state indication information;
where the state indication information is at least used to indicate: a time period during which a spatial unit of the base station is turned off and/or a time period during which the spatial unit is turned on.

In an embodiment, the spatial unit includes at least one of the following:
an antenna unit;
an antenna port;
a transceiving link;
a beam;
a pilot; and
an antenna panel.

In an embodiment, state indication information is received, where the state indication information is at least used to indicate: a time period during which a spatial unit of a base station is turned off and/or a time period during which the spatial unit is turned on. A measurement resource for measuring channel state information (CSI) is determined according to the state indication information. CSI measurement is performed based on the measurement resource to obtain a measurement result. An operation of sending a CSI report to the base station is performed based on the state indication information, where the CSI report includes the measurement result.

In an embodiment, state indication information is received, where the state indication information is at least used to indicate: a time period during which a spatial unit of a base station is turned off and/or a time period during which the spatial unit is turned on. A measurement resource for measuring channel state information (CSI) is determined according to the state indication information. CSI measurement is performed based on the measurement resource to obtain a measurement result. In response to that a time domain position of the measurement resource is before a CSI reference resource, the time domain position is not within a time domain position corresponding to the time period during which the spatial unit is turned off indicated by the state indication information, and/or at least one transmission occasion for the CSI-RS is received, a CSI report is sent to the base station, where the CSI report includes the measurement result.

In an embodiment, state indication information is received, where the state indication information is at least used to indicate: a time period during which a spatial unit of a base station is turned off and/or a time period during which the spatial unit is turned on. A measurement resource for measuring channel state information (CSI) is determined according to the state indication information. CSI measurement is performed based on the measurement resource to obtain a measurement result. In response to that the terminal is configured with connected mode discontinuous reception (C-DRX), a time domain position of the measurement resource is before a CSI reference resource, the time domain position is not within a time domain position corresponding to the time period during which the spatial unit is turned off as indicated by the state indication information, and/or at least one transmission occasion for the CSI-RS is received within an active time period, a CSI report is sent to the base station, where the CSI report includes the measurement result.

In an embodiment, state indication information is received, where the state indication information is at least used to indicate: a time period during which a spatial unit of a base station is turned off and/or a time period during which the spatial unit is turned on. A measurement resource for measuring channel state information (CSI) is determined according to the state indication information. CSI measurement is performed based on the measurement resource to obtain a measurement result. In response to that the terminal is configured with C-DRX, a CSR-RS resource set that is used for channel measurement and is associated with a CSI report is configured as a first number of resource sets and a second number of resource pairs, a time domain position of the measurement resource is before a CSI reference resource, the time domain position is not within a time domain position corresponding to the time period during which the spatial unit is turned off indicated by the state indication information, and/or at least one transmission occasion for the CSI-RS can be received for each CSI-RS resource of each of the resource pairs within the same active time period, the CSI report is sent to the base station, where the CSI report includes the measurement result.

In an embodiment, state indication information is received, where the state indication information is at least used to indicate: a time period during which a spatial unit of a base station is turned off and/or a time period during which the spatial unit is turned on. A measurement resource for measuring channel state information (CSI) is determined according to the state indication information. CSI measurement is performed based on the measurement resource to obtain a measurement result. In response to that the terminal is configured with C-DRX, the terminal is configured to monitor downlink control information (DCI) format 2-6, the terminal is configured with ps-TransmitOtherPeriodicCSI, a report configuration type is set to a periodic type, report content is not preset content, a time domain position of the measurement resource is before a CSI reference resource, the time domain position is not within a time domain position corresponding to the time period during which the spatial unit is turned off as indicated by the state indication information, and/or at least one transmission occasion for the CSI-RS is received, a CSI report is sent to the base station, where the CSI report includes the measurement result.

It should be noted that those skilled in the art can understand that the method provided in the embodiment of the present disclosure can be executed alone or together with some methods in the embodiments of the present disclosure or some methods in related art.

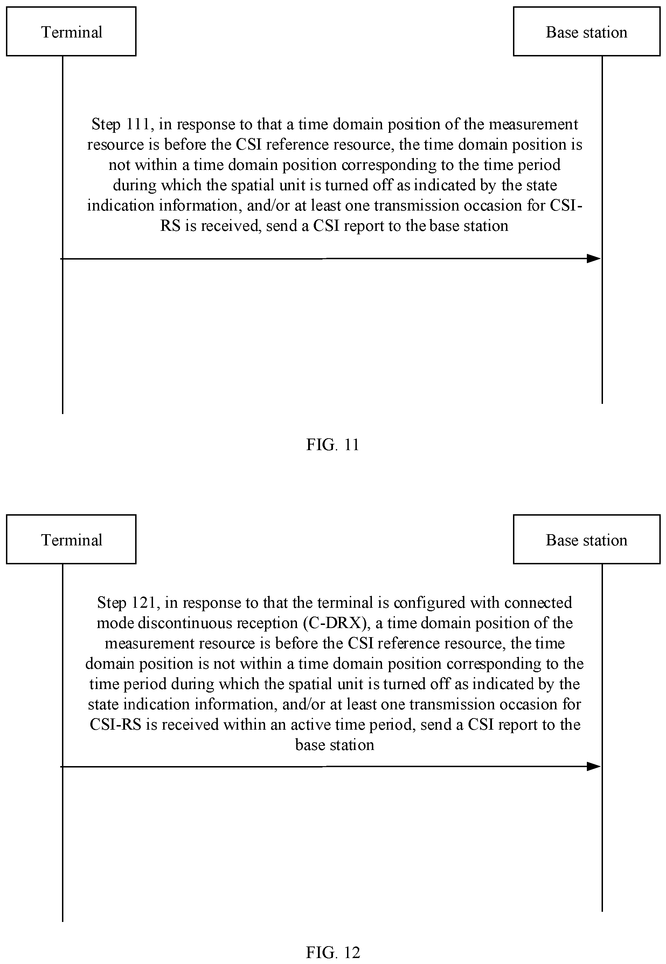

As shown in FIG. 11, this embodiment provides a method for measuring channel state information, the method is performed by a terminal, and the method includes the following step(s).

In step 111, in response to that a time domain position of the measurement resource is before a CSI reference resource, the time domain position is not within a time domain position corresponding to the time period during which the spatial unit is turned off as indicated by the state indication information, and/or at least one transmission occasion for CSI-RS is received, a CSI report is sent to the base station.

For the description of step 111, please refer to the description of step 21 or step 101, which will not be repeated here.

It should be noted that those skilled in the art can understand that the method provided in the embodiment of the present disclosure can be executed alone or together with some methods in the embodiments of the present disclosure or some methods in related art.

As shown in FIG. 12, this embodiment provides a method for measuring channel state information, the method is performed by a terminal, and the method includes the following step(s).

In step 121, in response to that the terminal is configured with connected mode discontinuous reception (C-DRX), a time domain position of the measurement resource is before the CSI reference resource, the time domain position is not within a time domain position corresponding to the time period during which the spatial unit is turned off as indicated by the state indication information, and/or at least one transmission occasion for CSI-RS is received within an active time period, a CSI report is sent to the base station.

For the description of step 121, please refer to the description of step 21 or step 101, which will not be repeated here.

It should be noted that those skilled in the art can understand that the method provided in the embodiment of the present disclosure can be executed alone or together with some methods in the embodiments of the present disclosure or some methods in related art.

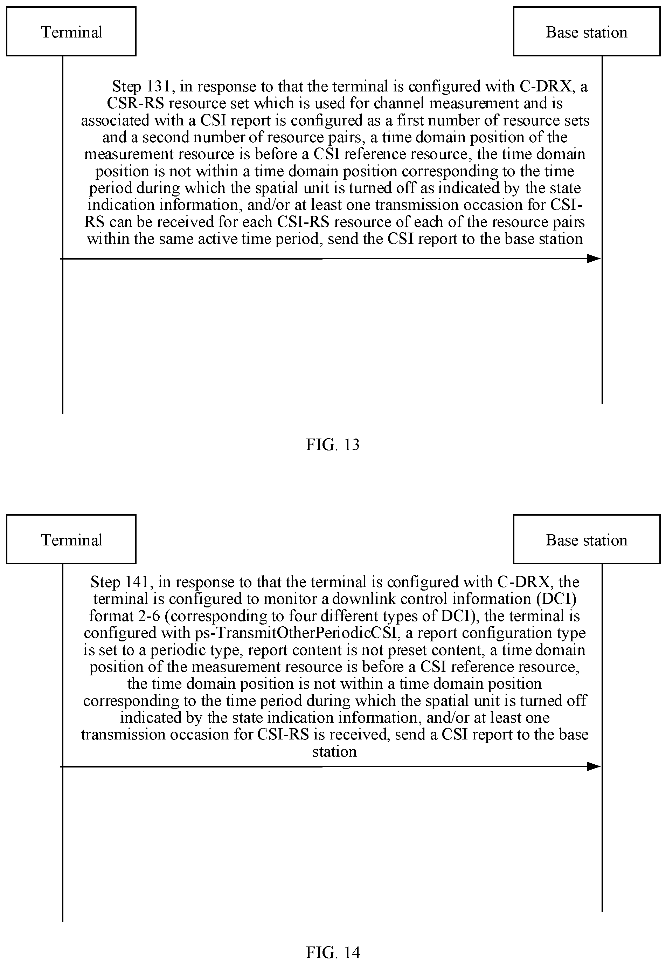

As shown in FIG. 13, this embodiment provides a method for measuring channel state information, the method is performed by a terminal, and the method includes the following step(s).

In step 131, in response to that the terminal is configured with C-DRX, a CSR-RS resource set which is used for channel measurement and is associated with a CSI report is configured as a first number of resource sets and a second number of resource pairs, a time domain position of the measurement resource is before a CSI reference resource, the time domain position is not within a time domain position corresponding to the time period during which the spatial unit is turned off as indicated by the state indication information, and/or at least one transmission occasion for the CSI-RS can be received for each CSI-RS resource of each of the resource pairs within the same active time period, the CSI report is sent to the base station.

For the description of step 131, please refer to the description of step 21 or step 101, which will not be repeated here.

It should be noted that those skilled in the art can understand that the method provided in the embodiment of the present disclosure can be executed alone or together with some methods in the embodiments of the present disclosure or some methods in related art.

As shown in FIG. 14, this embodiment provides a method for measuring channel state information, the method is performed by a terminal, and the method includes the following step(s).

In step 141, in response to that the terminal is configured with C-DRX, the terminal is configured to monitor a downlink control information (DCI) format 2-6 (corresponding to four different types of DCI), the terminal is configured with ps-TransmitOtherPeriodicCSI, a report configuration type is set to a periodic type, report content is not preset content, a time domain position of the measurement resource is before a CSI reference resource, the time domain position is not within a time domain position corresponding to the time period during which the spatial unit is turned off indicated by the state indication information, and/or at least one transmission occasion for CSI-RS is received, a CSI report is sent to the base station.

For the description of step 141, please refer to the description of step 21 or step 101, which will not be repeated here.

It should be noted that those skilled in the art can understand that the method provided in the embodiment of the present disclosure can be executed alone or together with some methods in the embodiments of the present disclosure or some methods in related art.

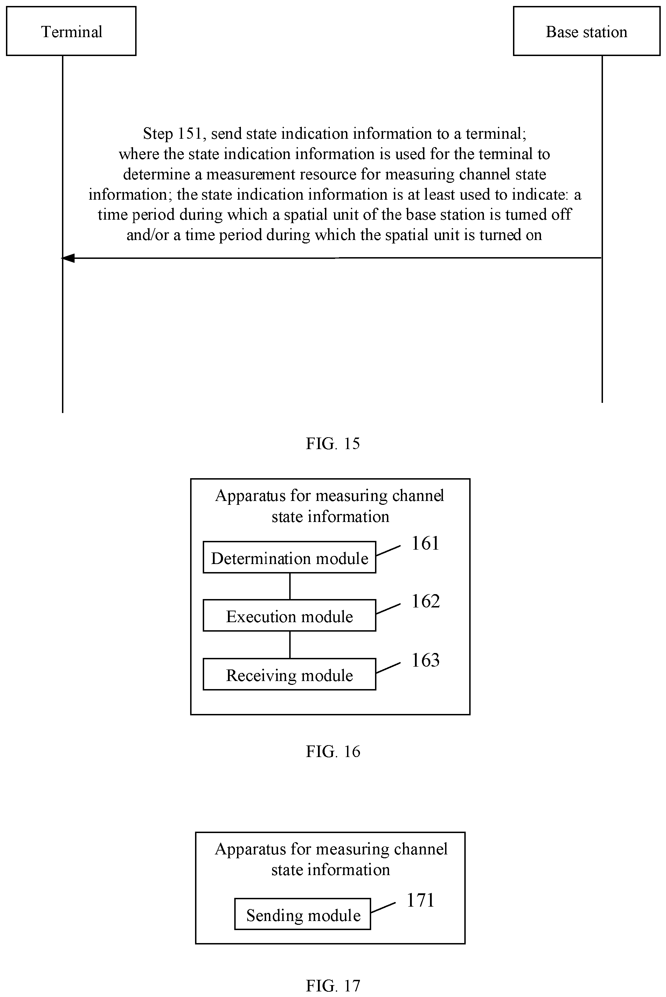

As shown in FIG. 15, this embodiment provides a method for measuring channel state information, the method is performed by a base station, and the method includes the following step(s).

In step 151, state indication information is sent to a terminal;
where the state indication information is used for the terminal to determine a measurement resource for measuring channel state information, and the state indication information is at least used to indicate: a time period during which a spatial unit of the base station is turned off and/or a time period during which the spatial unit is turned on.

Herein, the terminal involved in the embodiments of the present disclosure may be, but is not limited to, a mobile phone, a wearable device, a vehicle-mounted terminal, a road side unit (RSU), a smart home terminal, an industrial sensor device and/or a medical device, etc. In some embodiments, the terminal may be a Redcap terminal or a new air interface NR terminal of a predetermined version (for example, an R17 NR terminal).

The base station involved in the present disclosure may be various types of base stations, for example, a base station of a third generation mobile communication (3G) network, a base station of a fourth generation mobile communication (4G) network, a base station of a fifth generation mobile communication (5G) network, or other evolved base stations.

In an embodiment, the measurement resource may be a time domain and/or frequency domain resource used for measuring CSI. For example, the measurement resource may be a slot, a symbol and so on.

In an embodiment, the spatial unit may be a functional unit associated with an antenna for wireless transmission. For example, the spatial unit may be at least one of the following:
an antenna unit;
an antenna port;
a transceiving link;
a beam;
a pilot; and
an antenna panel.

Herein, the spatial unit being turned off means that the function corresponding to the spatial unit is turned off, for example, the function of sending a beam or a pilot is turned off. It should be noted that the turning off of a beam or a pilot may affect the measurement result of the CSI. For example, an accurate CSI measurement requires five measurement sampling points, but if some of the measurement sampling points are in the turned off period of the pilot, the measurement result will deviate from the actual situation, affecting the CSI measurement result.

It should be noted that, in the present disclosure, the measurement resource used for measuring the channel state information (CSI) may also be understood as measurement resources used for performing CSI measurement. The CSI measurement performed may also be channel measurement and/or interference measurement.

In an embodiment, state indication information is sent to a terminal; where the state indication information is used to determine a measurement resource for channel measurement and/or interference measurement of CSI measurement; where the state indication information is used for the terminal to determine measurement resources for measuring channel state information CSI; the state indication information is at least used to indicate: a time period during which a spatial unit of a base station is turned off and/or a time period during which the spatial unit is turned on.

In an embodiment, the base station sends state indication information to the terminal, where the state indication information is used for the terminal to determine the measurement resource for measuring the channel state information CSI; the state indication information is at least used to indicate: a time period during which a spatial unit of the base station is turned off and/or a time period during which the spatial unit is turned on. The terminal determines the measurement resource for measuring the channel state information CSI according to the state indication information. For example, the time period during which the spatial unit is turned off and/or the time period during which the spatial unit is turned on can be dynamically indicated through DCI. For example, it can be considered that upon reception of the DCI (indicating that a certain pilot is turned off), it takes effect immediately, and a time duration corresponding to the turned off time period is a fixed time duration configured by the higher layer, for example, 20 ms.

In an embodiment, state indication information is periodically sent to the terminal, where the state indication information is used for the terminal to determine a measurement resource for measuring channel state information (CSI); the state indication information is at least used to indicate: a time period during which a spatial unit of the base station is turned off and/or a time period during which the spatial unit is turned on. The terminal determines the measurement resource for measuring the channel state information (CSI) according to the state indication information. In this way, the measurement resource can be updated in real time according to the state indication information.

In an embodiment, in response to receiving request information for requesting state indication information sent by a terminal, the state indication information is sent to the terminal, where the state indication information is used for the terminal to determine a measurement resource for measuring channel state information (CSI); the state indication information is at least used to indicate: a time period during which a spatial unit of the base station is turned off and/or a time period during which the spatial unit is turned on.

In an embodiment, state indication information is sent to a terminal, where the state indication information is used by the terminal to determine a measurement resource for measuring channel state information (CSI); the state indication information is at least used to indicate: a time period during which a spatial unit of the base station is turned off and/or a time period during which the spatial unit is turned on; and the measurement resource is associated with a CSI report. For example, different measurement resources correspond to different CSI reports. It can be understand that the measurement results of the CSI measurement performed based on the measurement resources may be included in the CSI report. One or a set of measurement resources corresponds to one CSI report.

In an embodiment, state indication information is sent to a terminal, where the state indication information is used by the terminal to determine a measurement resource for measuring channel state information (CSI); the state indication information is at least used to indicate: a time period during which a spatial unit of the base station is turned off and/or a time period during which the spatial unit is turned on; and the measurement resource is associated with a CSI report. The terminal performs CSI measurement based on the measurement resource and obtains a measurement result of the CSI measurement. The base station receives the CSI report sent by the terminal, where the CSI report includes the measurement result.

It should be noted that those skilled in the art can understand that the method provided in the embodiment of the present disclosure can be executed alone or together with some methods in the embodiments of the present disclosure or some methods in related art.

By way of example, in all implementations of the present disclosure, the state indication information is at least used to indicate parameters of the spatial unit of the base station being turned off and parameters of the spatial unit being turned off. For example, the parameters of the spatial unit of the base station being turned off and/or turned on may be: the time period during which the spatial unit of the base station is turned off and/or the time period during which the spatial unit is turned on. For example, the time period may include at least one of the following: a specific time point, a time duration, a relative time offset value, a relative time offset value of a starting point, and a relative time offset value of an end point; in this way, the time during which the spatial unit of the base station is turned off and/or turned on may be determined from one or more of the above parameters. Of course, these are all examples, the parameters of the spatial unit of the base station being turned off and/or turned on may be any parameters that enables the UE to determine that the spatial unit of the base station is turned off and/or turned on, and this is not limited in the embodiments of the present disclosure. The time period during which the spatial unit of the base station is turned off may refer to a time length tₒ from when the spatial unit of the base station is turned off to when it is turned on, and the time length tₒ may be any value as 0<tₒ<∞; similarly, the time period during which the spatial unit of the base station is turned on may refer to a time length t_{c} from when the spatial unit of the base station is turned on to when it is turned off, and the time length t_{c} may also be any value as 0<t_{c}<∞. For example, in the following embodiments of the present disclosure, the explanation is provided by way of examples where the parameters of the spatial unit of the base station being turned off and/or turned on may be the time period during which the spatial unit of the base station is turned off and/or the time period during which the spatial unit is turned on, but those skilled in the art can understand that within the time period during which the spatial unit of the base station is turned off means that the spatial unit of the base station is in a turned-off state; and within the time period during which the spatial unit of the base station is turned on means that the spatial unit of the base station is in an turned-on state.

As shown in FIG. 16, this embodiment provides an apparatus for measuring channel state information, and the apparatus includes:
a determination module 161, configured to: determine, according to state indication information, a measurement resource for measuring channel state information (CSI);
where the state indication information is at least used to indicate: a time period during which a spatial unit of a base station is turned off and/or a time period during which the spatial unit is turned on.

In an embodiment, the determining module 161 is further configured to associate the measurement resource with a CSI report.

In an embodiment, the determining module 161 is further configured to:
determine the measurement resource for measuring the channel state information according to configuration result of a predetermined higher layer parameter and the state indication information;
the predetermined higher layer parameter includes at least one of the following:
   a first parameter, which is a parameter used for channel measurement; or
   a second parameter, which is a parameter used for interference measurement.

In an embodiment, the determining module 161 is further configured to perform at least one of the following:
in response to that the first parameter is not configured and the state indication information indicates the time period during which the spatial unit is turned off, determining the measurement resource to be: a non- zero power channel state information reference signal (NZP CSI-RS) resource a time domain position of which is before a channel state information CSI reference resource and is not within the turned off time period;
in response to that the second parameter is not configured and the state indication information indicates the time period during which the spatial unit is turned off, determining the measurement resource to be: a channel state information interference measurement (CSI-IM) resource a time domain position of which is before the CSI reference resource and is not within the turned off time period;
in response to that the second parameter is not configured and the state indication information indicates the time period during which the spatial unit is turned off, determining the measurement resource to be: an NZP CSI-RS resource used for interference measurement a time domain position of which is before the CSI reference resource and is not within the turned off time period;
in response to that the first parameter is configured and the state indication information indicates the time period during which the spatial unit is turned off, determining the measurement resource to be: an NZP CSI-RS resource report a time domain position of which is before the CSI reference resource, is not within the turned off time period, and is closest to an occasion for reporting a CSI report;
in response to that the second parameter is configured and the state indication information indicates the time period during which the spatial unit is turned off, determining the measurement resource to be: a CSI-IM resource a time domain position of which is before a CSI reference resource, is not within the turned off time period, and is closest to an occasion for reporting a CSI report; and
in response to that the second parameter is configured and the state indication information indicates the time period in which the spatial unit is turned off, determining the measurement resource to be: an NZP CSI-RS resource used for interference measurement a time domain position of which is before a CSI reference resource, is not within the turned off time period, and is closest to an occasion for reporting the CSI report.

In an embodiment, the apparatus further includes:
an execution module 162, configured to execute an operation of sending a CSI report to the base station based on the state indication information.
In an embodiment, the apparatus further includes a sending module, and the sending module is configured to perform at least one of the following:
in response to that a time domain position of the measurement resource is before a CSI reference resource, the time domain position is not within a time domain position corresponding to the time period during which the spatial unit is turned off as indicated by the state indication information, and/or at least one transmission occasion for CSI-RS is received, sending a CSI report to the base station;
in response to that the terminal is configured with connected mode discontinuous reception (C-DRX), a time domain position of the measurement resource is before a CSI reference resource, the time domain position is not within a time domain position corresponding to the time period during which the spatial unit is turned off as indicated by the state indication information, and/or at least one transmission occasion for CSI-RS is received within an active time period, sending a CSI report to the base station;
in response to that the terminal is configured with C-DRX, a CSR-RS resource set which is used for channel measurement and is associated with a CSI report is configured as a first number of resource sets and a second number of resource pairs, a time domain position of the measurement resource is before a CSI reference resource, the time domain position is not within a time domain position corresponding to the time period during which the spatial unit is turned off indicated by the state indication information, and/or at least one transmission occasion for CSI-RS can be received for each CSI-RS resource of each of the resource pairs within the same active time period, sending the CSI report to the base station; and
in response to that the terminal is configured with C-DRX, the terminal is configured to monitor downlink control information (DCI) format 2-6, the terminal is configured with ps-TransmitOtherPeriodicCSI, a report configuration type is set to a periodic type, report content is not preset content, a time domain position of the measurement resource is before a CSI reference resource, the time domain position is not within a time domain position corresponding to the time period during which the spatial unit is turned off indicated by the state indication information, and/or at least one transmission occasion for CSI-RS is received, sending a CSI report to the base station.

In an embodiment, the apparatus further includes:
a receiving module 163, configured to receive the state indication information sent by the base station.

It should be noted that those skilled in the art can understand that the method provided in the embodiment of the present disclosure can be executed alone or together with some methods in the embodiments of the present disclosure or some methods in related art.

As shown in FIG. 17, this embodiment provides an apparatus for measuring channel state information, and the apparatus includes:
a sending module 171, configured to send state indication information to a terminal;
where the state indication information is used for the terminal to determine a measurement resource for measuring channel state information (CSI), and the state indication information is at least used to indicate: a time period during which a base station is turned off and/or a time period during which it is turned on.

It should be noted that those skilled in the art can understand that the method provided in the embodiment of the present disclosure can be executed alone or together with some methods in the embodiments of the present disclosure or some methods in related art.

An embodiment of the present disclosure provides a communication device, and the communication device includes:
a processor; and
a memory for storing instructions executable by the processor;
where the processor is configured to implement the method in any of the embodiments of the present disclosure when running the executable instructions.

The processor may include various types of storage media, which are non-transitory computer storage media that can continue to memorize information stored thereon after the communication device loses power.

The processor may be connected to the memory via a bus or the like to read the executable program stored in the memory.

An embodiment of the present disclosure further provides a computer storage medium, the computer storage medium stores a computer executable program, and the executable program, when being executed by a processor, implements the method in any of the embodiments of the present disclosure.

Regarding the apparatuses in the above embodiments, the specific manner in which the modules perform operations has been described in detail in the method embodiments, and will not be elaborated here.

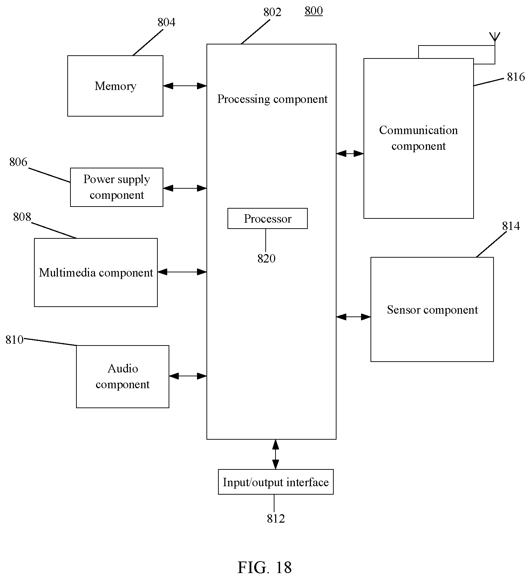

As shown in FIG. 18, an embodiment of the present disclosure provides a structure of a terminal.

Referring to a terminal 800 shown in FIG. 18, this embodiment provides a terminal 800, which may be a mobile phone, a computer, a digital broadcast terminal, a messaging device, a game console, a tablet device, a medical device, a fitness device, a personal digital assistant, etc.

Referring to FIG. 18, the terminal 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls the overall operation of the terminal 800, such as operations associated with display, phone calls, data communications, camera operations, and recording operations. The processing component 802 may include one or more processors 820 to execute instructions to complete all or part of the steps of the above methods. In addition, the processing component 802 may include one or more modules to facilitate interaction between the processing component 802 and other components. For example, the processing component 802 may include a multimedia module to facilitate the interaction between the multimedia component 808 and the processing component 802.

The memory 804 is configured to store various types of data to support operations on the device 800. Examples of such data include instructions for any application or method operating on the terminal 800, contact data, phone book data, messages, pictures, videos, etc. The memory 804 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply component 806 provides power to various components of the terminal 800. The power supply component 806 may include a power management system, one or more power supplies, and other components associated with generating, managing, and distributing power to the terminal 800.

The multimedia component 808 includes a screen that provides an output interface between the terminal 800 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundaries of the touch or slide action, but also detect the duration and pressure associated with the touch or slide operation. In some embodiments, the multimedia component 808 includes a front camera and/or a rear camera. When the device 800 is in an operating mode, such as a shooting mode or a video mode, the front camera and/or the rear camera may receive external multimedia data. Each of the front camera and rear camera may be a fixed optical lens system or have a focal length and optical zoom capability.

The audio component 810 is configured to output and/or input audio signals. For example, the audio component 810 includes a microphone (MIC), and when the terminal 800 is in an operation mode, such as a call mode, a recording mode, and a speech recognition mode, the microphone is configured to receive an external audio signal. The received audio signal can be further stored in the memory 804 or sent via the communication component 816. In some embodiments, the audio component 810 also includes a speaker for outputting audio signals.

The I/O interface 812 provides an interface between the processing component 802 and peripheral interface modules, such as a keyboard, a click wheel, buttons, etc. These buttons may include but are not limited to: a home button, a volume button, a start button, and a lock button.

The sensor component 814 includes one or more sensors for providing various aspects of status assessment for the terminal 800. For example, the sensor component 814 can detect an open/closed state of the device 800 or relative positioning of the components, such as the display and keypad of the terminal 800, and the sensor component 814 can also detect the position change of the terminal 800 or a component in the terminal 800, presence or absence of contact between the user and the terminal 800, an orientation or acceleration/deceleration of the terminal 800, and temperature change of the terminal 800. The sensor component 814 may include a proximity sensor configured to detect the presence of nearby objects without any physical contact. The sensor component 814 may also include an optical sensor, such as a CMOS or CCD image sensor, for use in imaging applications. In some embodiments, the sensor component 814 may also include an acceleration sensor, a gyroscope sensor, a magnetic sensor, a pressure sensor, or a temperature sensor.

The communication component 816 is configured to facilitate wired or wireless communication between the terminal 800 and other devices. The terminal 800 can access a wireless network based on a communication standard, such as Wi-Fi, 2G or 3G, or a combination thereof. In an illustrative embodiment, the communication component 816 receives a broadcast signal or broadcast-related information from an external broadcast management system via a broadcast channel. In an illustrative embodiment, the communication component 816 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an illustrative embodiment, the terminal 800 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an illustrative embodiment, a non-transitory computer-readable storage medium including instructions is also provided, such as the memory 804 including instructions, and the instructions can be executed by a processor 820 of the terminal 800 to perform the above methods. For example, the non-transitory computer-readable storage medium can be a ROM, a random access memory (RAM), a CD-ROM, a magnetic tape, a floppy disk, an optical data storage device, etc.

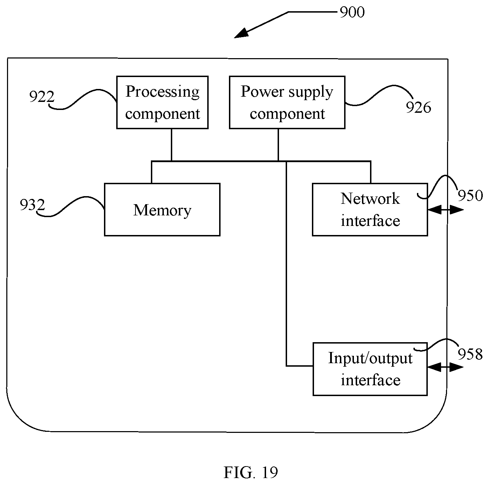

As shown in FIG. 19, an embodiment of the present disclosure illustrates a structure of a base station. For example, a base station 900 may be provided as a network-side device. Referring to FIG. 19, the base station 900 includes a processing component 922, which further includes one or more processors, and memory resources represented by a memory 932 for storing instructions executable by the processing component 922, such as an application. The application stored in the memory 932 may include one or more modules, each corresponding to a set of instructions. In addition, the processing component 922 is configured to execute instructions to perform any method of the aforementioned methods applied to the base station.

The base station 900 may also include a power supply component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS X TM, Unix TM, Linux TM, FreeBSD TM or the like.

Those skilled in the art will readily appreciate other embodiments of the present disclosure after considering the specification and practicing the disclosure disclosed herein. The present disclosure is intended to cover any variations, uses or adaptations of the present disclosure that follow the general principles of the present disclosure and include common knowledge or conventional technical measures in the art that are not disclosed in the present disclosure. The description and examples are to be considered illustrative only, and the true scope and spirit of the present disclosure are indicated by the following claims.

It should be understood that the present disclosure is not limited to the precise construction that has been described above and shown in the drawings and that various modifications and changes may be made without departing from the scope thereof. The scope of the present disclosure is limited only by the appended claims.

## Claims

1. A method for measuring channel state information, the method being performed by a terminal and comprising:
determining, according to state indication information, a measurement resource for measuring channel state information (CSI);
wherein the state indication information is at least used to indicate a time period during which a spatial unit of a base station is turned off and/or a time period during which the spatial unit is turned on.

2. The method according to claim 1, wherein the measurement resource is associated with a CSI report.

3. The method according to claim 1, wherein the spatial unit comprises at least one of:
an antenna unit;
an antenna port;
a transceiving link;
a beam;
a pilot; and
an antenna panel.

4. The method according to claim 1, wherein determining, according to the state indication information, the measurement resource for measuring the channel state information comprises:
determining the measurement resource for measuring the channel state information according to a configuration result of a predetermined higher layer parameter and the state indication information;
wherein the predetermined higher layer parameter comprises at least one of:
a first parameter, which is a parameter used for channel measurement; or
a second parameter, which is a parameter used for interference measurement.

5. The method according to claim 4, wherein determining the measurement resource for measuring the channel state information according to the configuration result of the predetermined higher layer parameter and the state indication information comprises at least one of:
in response to that the first parameter is not configured and the state indication information indicates the time period during which the spatial unit is turned off, determining the measurement resource to be: a non- zero power channel state information reference signal (NZP CSI-RS) resource a time domain position of which is before a channel state information (CSI) reference resource and is not within the turned off time period;
in response to that the second parameter is not configured and the state indication information indicates the time period during which the spatial unit is turned off, determining the measurement resource to be: a channel state information interference measurement (CSI-IM) resource a time domain position of which is before the CSI reference resource and is not within the turned off time period;
in response to that the second parameter is not configured and the state indication information indicates the time period during which the spatial unit is turned off, determining the measurement resource to be: an NZP CSI-RS resource used for interference measurement a time domain position of which is before the CSI reference resource and is not within the turned off time period;
in response to that the first parameter is not and the state indication information indicates the time period during which the spatial unit is turned off, determining the measurement resource to be: an NZP CSI-RS resource report a time domain position of which is before the CSI reference resource, is not within the turned off time period, and is closest to an occasion for reporting a CSI report;
in response to that the second parameter is configured and the state indication information indicates the time period during which the spatial unit is turned off, determining the measurement resource to be: a CSI-IM resource a time domain position of which is before the CSI reference resource, is not within the turned off time period, and is closest to the occasion for reporting a CSI report; and
in response to that the second parameter is configured and the state indication information indicates the time period in which the spatial unit is turned off, determining the measurement resource to be: an NZP CSI-RS resource used for interference measurement a time domain position of which is before the CSI reference resource, is not within the turned off time period, and is closest to an occasion for reporting the CSI report.

6. The method according to claim 1, further comprising:
performing an operation of sending a CSI report to a base station based on the state indication information.

7. The method according to claim 6, wherein performing the operation of sending the CSI report to the base station based on the state indication information comprises at least one of:
in response to that a time domain position of the measurement resource is before a CSI reference resource, the time domain position is not within a time domain position corresponding to the time period during which the spatial unit is turned off indicated by the state indication information, and/or at least one transmission occasion for CSI-RS is received, sending the CSI report to the base station;
in response to that the terminal is configured with connected mode discontinuous reception (C-DRX), the time domain position of the measurement resource is before the CSI reference resource, the time domain position is not within the time domain position corresponding to the time period during which the spatial unit is turned off indicated by the state indication information, and/or at least one transmission occasion for CSI-RS is received within an active time period, sending the CSI report to the base station;
in response to that the terminal is configured with C-DRX, a CSR-RS resource set that is used for channel measurement and is associated with the CSI report is configured as a first number of resource sets and a second number of resource pairs, the time domain position of the measurement resource is before the CSI reference resource, the time domain position is not within the time domain position corresponding to the time period during which the spatial unit is turned off indicated by the state indication information, and/or at least one transmission occasion for the CSI-RS can be received for each CSI-RS resource of each of the resource pairs within the same active time period, sending the CSI report to the base station; and
in response to that the terminal is configured with C-DRX, the terminal is configured to monitor downlink control information (DCI) format 2-6, the terminal is configured with ps-TransmitOtherPeriodicCSI, a report configuration type is set to a periodic type, report content is not preset content, the time domain position of the measurement resource is before the CSI reference resource, the time domain position is not within the time domain position corresponding to the time period during which the spatial unit is turned off indicated by the state indication information, and/or at least one transmission occasion for CSI-RS is received, sending the CSI report to the base station.

8. The method according to claim 1, further comprising:
receiving the state indication information sent by the base station.

9. A method for measuring channel state information, the method being performed by a base station and comprising:
sending state indication information to a terminal;
wherein the state indication information is used for the terminal to determine a measurement resource for measuring channel state information (CSI), and the state indication information is at least used to indicate a time period during which a spatial unit of the base station is turned off and/or a time period during which the spatial unit is turned on.

10. The method according to claim 9, wherein the measurement resource is associated with a CSI report.

11. The method according to claim 9, wherein the spatial unit comprises at least one of:
an antenna unit;
an antenna port;
a transceiving link;
a beam;
a pilot; and
an antenna panel.

12. An apparatus for measuring channel state information, comprising:
a determination module, configured to determine a measurement resource for measuring channel state information (CSI) according to state indication information;
wherein the state indication information is at least used to indicate a time period during which a spatial unit of a base station is turned off and/or a time period during which the spatial unit is turned on.

13. The apparatus according to claim 12, wherein the determining module is further configured to associate the measurement resource with a CSI report.

14. The apparatus according to claim 12, wherein the determining module is further configured to:
determine the measurement resource for measuring the channel state information according to a configuration result of a predetermined higher layer parameter and the state indication information;
wherein the predetermined higher layer parameter comprises at least one of:
a first parameter, which is a parameter used for channel measurement;
a second parameter, which is a parameter used for interference measurement.

15. The apparatus according to claim 14, wherein the determining module is further configured to perform at least one of:
in response to that the first parameter is not configured and the state indication information indicates the time period during which the spatial unit is turned off, determining the measurement resource to be: a non- zero power channel state information reference signal (NZP CSI-RS) resource a time domain position of which is before a channel state information (CSI) reference resource and is not within the turned off time period;
in response to that the second parameter is not configured and the state indication information indicates the time period during which the spatial unit is turned off, determining the measurement resource to be: a channel state information interference measurement (CSI-IM) resource a time domain position of which is before the CSI reference resource and is not within the turned off time period;
in response to that the second parameter is not configured and the state indication information indicates the time period during which the spatial unit is turned off, determining the measurement resource to be: an NZP CSI-RS resource used for interference measurement a time domain position of which is before the CSI reference resource and is not within the turned off time period;
in response to that the first parameter is configured and the state indication information indicates the time period during which the spatial unit is turned off, determining the measurement resource to be: an NZP CSI-RS resource report a time domain position of which is before the CSI reference resource, is not within the turned off time period, and is closest to an occasion for reporting a CSI report;
in response to that the second parameter is configured and the state indication information indicates the time period during which the spatial unit is turned off, determining the measurement resource to be: a CSI-IM resource a time domain position of which is before the CSI reference resource, is not within the turned off time period, and is closest to the occasion for reporting the CSI report; and
in response to that the second parameter is configured and the state indication information indicates the time period in which the spatial unit is turned off, determining the measurement resource to be: an NZP CSI-RS resource used for interference measurement a time domain position of which is before the CSI reference resource, is not within the turned off time period, and is closest to the occasion for reporting the CSI report.

16. The apparatus according to claim 12, further comprising:
an execution module, configured to execute an operation of sending a CSI report to the base station based on the state indication information.

17. The apparatus according to claim 16, wherein the apparatus further comprises a sending module, and the sending module is configured to perform at least one of:
in response to that a time domain position of the measurement resource is before a CSI reference resource, the time domain position is not within a time domain position corresponding to the time period during which the spatial unit is turned off indicated by the state indication information, and/or at least one transmission occasion for CSI-RS is received, sending the CSI report to the base station;
in response to that the terminal is configured with connected mode discontinuous reception (C-DRX), the time domain position of the measurement resource is before the CSI reference resource, the time domain position is not within the time domain position corresponding to the time period during which the spatial unit is turned off indicated by the state indication information, and/or at least one transmission occasion for CSI-RS is received within an active time period, sending the CSI report to the base station;
in response to that the terminal is configured with C-DRX, a CSR-RS resource set that is used for channel measurement and is associated with the CSI report is configured as a first number of resource sets and a second number of resource pairs, the time domain position of the measurement resource is before the CSI reference resource, the time domain position is not within the time domain position corresponding to the time period during which the spatial unit is turned off indicated by the state indication information, and/or at least one transmission occasion for CSI-RS can be received for each CSI-RS resource of each of the resource pairs within the same active time period, sending the CSI report to the base station; and
in response to that the terminal is configured with C-DRX, the terminal is configured to monitor downlink control information (DCI) format 2-6, the terminal is configured with ps-TransmitOtherPeriodicCSI, a report configuration type is set to a periodic type, report content is not preset content, the time domain position of the measurement resource is before the CSI reference resource, the time domain position is not within the time domain position corresponding to the time period during which the spatial unit is turned off indicated by the state indication information, and/or at least one transmission occasion for CSI-RS is received, sending the CSI report to the base station.

18. The apparatus according to claim 12, further comprising:
a receiving module, configured to receive the state indication information sent by the base station.

19. An apparatus for measuring channel state information, comprising:
a sending module, configured to send state indication information to a terminal;
wherein the state indication information is used for the terminal to determine a measurement resource for measuring channel state information (CSI), and the state indication information is at least used to indicate a time period during which a base station is turned off and/or a time period during which it is turned on.

20. A communication device, comprising:
a memory; and
a processor, connected to the memory and configured to execute computer executable instructions stored on the memory and implement the method according to any one of claims 1 to 11 or claims 12 to 18.

21. A computer storage medium storing computer executable instructions which, when being executed by a processor, implement the method according to any one of claims 1 to 11 or claims 12 to 18.
